# EUROPEAN PATENT APPLICATION

(11) **EP 3 705 162 A1**
(43) Date of publication of application: **09.09.2020**
(21) Application number: 20155700.6
(22) Date of filing: 05.02.2020
(51) Int. Cl.: A63F 13/803, A63F 13/28, H04N 21/414, H04N 21/81, H04N 21/4223, H04N 21/422, H04N 21/43

(54) **VIRTUAL REALITY SYSTEM AND VIRTUAL REALITY METHOD**

(30) Priority: 08.03.2019 JP 2019042856
(71) Applicant: TOYOTA JIDOSHA KABUSHIKI KAISHA, Toyota-shi, Aichi-ken 471-8571 (JP); NIKON CORPORATION, Minato-ku Tokyo 108-6290 (JP)
(72) Inventor: INOUE, Naoya, TOYOTA-SHI, AICHI-KEN, 471-8571 (JP); NAKAJIMA, Yasumasa, TOKYO, 108-6290 (JP)
(74) Representative: Cabinet Beau de Loménie

(57) **Abstract**

A virtual reality system (100) allows a user to experience simulated vehicle traveling. The virtual reality system (100) includes an image capturing device (1) mounted on a vehicle (50) and configured to capture an image of the surroundings of the vehicle (50) during traveling of the vehicle (50) and generate video data, an acquisition device (2) mounted on the vehicle (50) and configured to acquire behavior of the vehicle (50) during traveling of the vehicle (50) and generate behavior data based on information on the behavior, a computer (3) configured to store the video data received from the image capturing device (1) and the behavior data received from the acquisition device (2), and time-synchronize the video data and the behavior data, an HMD (4) configured to play back the video data, and a seat device (5) configured to play back the behavior data.

## Description

### BACKGROUND OF THE INVENTION

### 1. Field of the Invention

The present invention relates to a virtual reality system and a virtual reality method.

### 2. Description of Related Art

A simulation device that allows a user to experience a simulated vehicle riding state is known (see, for example, Japanese Unexamined Patent Application Publication No. 7-271289 (JP 7-271289 A)).

The simulation device disclosed in JP 7-271289 A is configured to allow an evaluator to experience the simulated vehicle riding state for the purpose of evaluating a driving field of view during vehicle traveling and turning. The simulation device includes a head-mounted display that presents the evaluator with three-dimensional stereoscopic video as a driving field of view, a driving simulator body that provides the evaluator with a sense of driving based on vehicle behavior, and a speaker that outputs a vehicle traveling sound, and the like.

### SUMMARY OF THE INVENTION

Here, using the above simulation device, it is possible to allow the evaluator to experience a simulated vehicle riding state, but there is room for improvement in terms of enhancing a sense of presence.

The present invention provides a virtual reality system and a virtual reality method capable of enhancing the sense of presence during an experience of simulated vehicle traveling.

A virtual reality system according to a first aspect of the present invention allows a user to experience simulated vehicle traveling. The virtual reality system includes an image capturing device mounted on a vehicle and configured to capture an image of the surroundings of the vehicle during traveling of the vehicle and generate video data, an acquisition device mounted on the vehicle and configured to acquire behavior of the vehicle during traveling of the vehicle and generate behavior data based on information on the behavior, a computer configured to store the video data received from the image capturing device and the behavior data received from the acquisition device, and time-synchronize the video data and the behavior data, a first playback device configured to play back the video data, and a second playback device configured to play back the behavior data.

With the above configuration, since video and behavior are acquired while the actual vehicle actually travels and data based on the video and the behavior is played back, video and behavior based on the reality are reproduced. Therefore, it is possible to enhance a sense of presence during the experience of simulated vehicle traveling. In addition, since the video data and the behavior data are time-synchronized, it is possible to prevent the video played back by the first playback device deviating from the behavior played back by the second playback device.

In the virtual reality system, the acquisition device may be configured to acquire meter (or metered) information of the vehicle during traveling of the vehicle and generate meter display data based on the meter information. The computer may be configured to store the meter display data received from the acquisition device, and time-synchronize the meter display data with the video data and the behavior data. The first playback device may be configured to play back the meter display data.

With the above configuration, it is possible for the user to easily understand a state of the vehicle by playing back the meter display data.

In the virtual reality system, the image capturing device may be configured to capture the image of the surroundings of the vehicle in a range of 360 degrees.

With the above configuration, since all the surroundings of the vehicle can be reproduced, it is possible to enhance the sense of presence more.

In the virtual reality system, the acquisition device may be configured to acquire the behavior of the vehicle from an in-vehicle network of the vehicle.

With the above configuration, since the exact behavior of the vehicle can be acquired, it is possible to enhance the sense of presence more.

In the virtual reality system, the image capturing device may include a microphone and be configured to collect sound in a cabin of the vehicle via the microphone during traveling of the vehicle and generate sound data based on the sound. The image capturing device may be configured to associate the video data with the sound data and transmit the video data and the sound data to the computer.

In the virtual reality system, the image capturing device may be configured to add a recording start time of the image to the video data.

In the virtual reality system, the image capturing device may be configured to add a recording start time of the sound to the sound data.

In the virtual reality system, the acquisition device may be configured to add a recording start time of the behavior to the behavior data.

In the virtual reality system, the behavior data may include changes with time in longitudinal acceleration, lateral acceleration, vertical acceleration, a roll angle, a pitch angle, and a yaw angle of the vehicle from the start to the end of the recording.

In the virtual reality system, the acquisition device may be configured to add a recording start time of the meter information to the meter display data.

In the virtual reality system, the first playback device may be a head-mounted display.

In the virtual reality system, the second playback device may be a seat device.

A virtual reality method according to a second aspect of the present invention allows a user to experience simulated vehicle traveling. The virtual reality method includes a step of, by an image capturing device mounted on a vehicle, capturing an image of the surroundings of the vehicle during traveling of the vehicle and generating video data, and, by an acquisition device mounted on the vehicle, acquiring behavior of the vehicle during traveling of the vehicle and generating behavior data, a step of storing, by a computer, the video data received from the image capturing device and the behavior data received from the acquisition device, a step of time-synchronizing, by the computer, the video data and the behavior data, and a step of playing back, by a first playback device, the video data and playing back, by a second playback device, the behavior data.

With the above configuration, since video and behavior are acquired while the actual vehicle actually travels and data based on the video and the behavior is played back, video and behavior based on the reality are reproduced. Therefore, it is possible to enhance the sense of presence during the experience of simulated vehicle traveling. In addition, since the video data and the behavior data are time-synchronized, it is possible to prevent the video played back by the first playback device from deviating from the behavior played back by the second playback device.

With each aspect of the present invention, it is possible to enhance the sense of presence during the experience of simulated vehicle traveling.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram illustrating a schematic configuration of a virtual reality system according to the present embodiment;
FIG. 2 is a block diagram for describing an image capturing device of the virtual reality system illustrated in FIG. 1;
FIG. 3 is a block diagram for describing an acquisition device of the virtual reality system illustrated in FIG. 1;
FIG. 4 is a block diagram for describing a head-mounted display of the virtual reality system illustrated in FIG. 1;
FIG. 5 is a block diagram for describing a seat device of the virtual reality system illustrated in FIG. 1;
FIG. 6 is a flowchart for describing an operation example of the image capturing device at the time of data generation in the virtual reality system according to the present embodiment;
FIG. 7 is a flowchart for describing an operation example of the acquisition device at the time of data generation in the virtual reality system according to the present embodiment; and
FIG. 8 is a flowchart for describing an operation example at the time of data playback in the virtual reality system according to the present embodiment.

### DETAILED DESCRIPTION OF EMBODIMENTS

Hereinafter, an embodiment of the present invention will be described with reference to drawings.

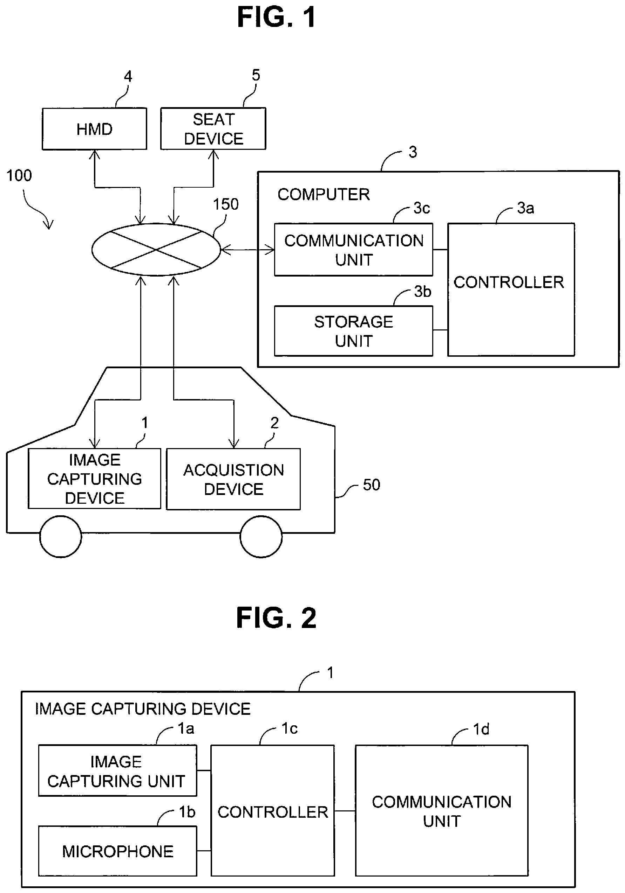

First, a configuration of a virtual reality system 100 according to an embodiment of the present invention will be described with reference to FIGS. 1 to 5.

The virtual reality system 100 is configured to be able to allow a user to experience simulated vehicle traveling. As illustrated in FIG. 1, the virtual reality system 100 includes an image capturing device 1 and an acquisition device 2 that generate (collect) data, which is played back during a simulated experience, a computer 3 that stores the generated data, and a head-mounted display (hereinafter, referred to as "HMD") 4 and a seat device 5 that play back the stored data and allow the user to experience simulated vehicle traveling. The image capturing device 1, the acquisition device 2, the computer 3, the HMD 4 and the seat device 5 are connected via a network 150.

### Image Capturing Device

The image capturing device 1 is mounted on a vehicle 50 that performs simulated vehicle traveling which the user experiences, and is configured to capture an image of the surroundings of the vehicle 50 during traveling of the vehicle 50. As illustrated in FIG. 2, the image capturing device 1 includes an image capturing unit 1a, a microphone 1b, a controller 1c, and a communication unit 1d.

The image capturing unit 1a is configured to be able to capture the image of the surroundings of the vehicle 50 in a range of 360 degrees. The image capturing unit 1a includes, for example, two sets of wide-angle lenses and image capturing elements (neither shown) that are arranged so as to face the front and rear of the vehicle 50, respectively. Then, the controller 1c combines two results of image capturing obtained by the two sets of wide-angle lenses and image capturing elements, respectively, and generates video data. The video data is moving image data obtained by capturing the images of the surroundings of the vehicle 50 in a range of 360 degrees. The image capturing unit 1a is provided, for example, at the passenger seat in the vehicle cabin.

The microphone 1b is provided, for example, at the passenger seat in the vehicle cabin to collect sound in the vehicle cabin during traveling of the vehicle. The controller 1c generates sound data based on sound input to the microphone 1b.

The controller 1c is configured to control the image capturing device 1. Specifically, the controller 1c has a function of generating the video data based on the results of image capturing by the image capturing unit 1a, and generating the sound data based on the sound input to the microphone 1b. Further, the controller 1c is configured to associate the video data with the sound data and transmit the video data and the sound data to the computer 3. In addition, the controller 1c instructs the image capturing unit 1a and the microphone 1b to start and end recording of video and sound, and adds a recording start time to the video data and the sound data. Therefore, the video data is moving image data from the start to the end of recording, and the sound data is sound data (sound data during the recording period of the moving image) from the start to the end of recording.

The communication unit 1d can communicate with the computer 3 via the network 150, and is provided to transmit the video data and the sound data to the computer 3.

### Acquisition Device

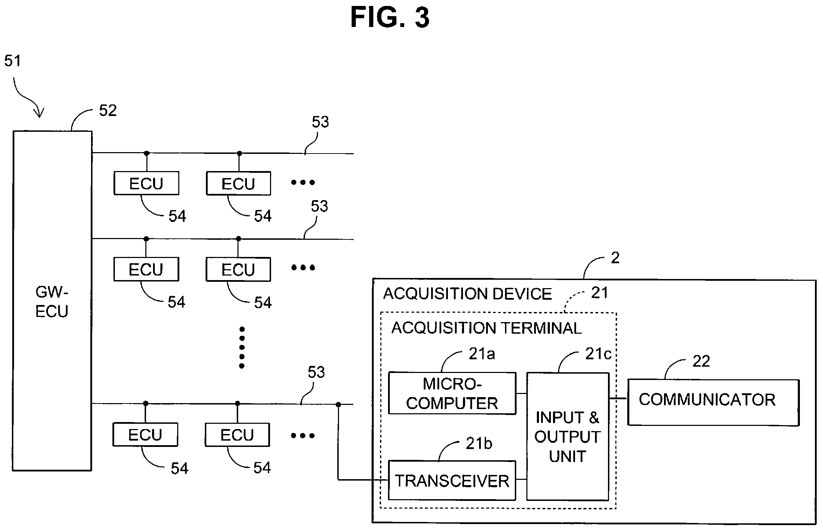

The acquisition device 2 is mounted on the vehicle 50 that performs simulated vehicle traveling which the user experiences, and is configured to acquire behavior and meter information of the vehicle 50 during traveling of the vehicle 50. As illustrated in FIG. 3, the acquisition device 2 includes an acquisition terminal 21 and a communicator 22. The acquisition terminal 21 is connected to an in-vehicle network 51 of the vehicle 50, and is configured to acquire the behavior and meter information of the vehicle 50 from the in-vehicle network 51.

Here, the in-vehicle network 51 of the vehicle 50 includes a gateway ECU (hereinafter, referred to as "GW-ECU") 52 and a plurality of buses 53 connected to the GW-ECU 52. Each bus 53 is connected to a plurality of ECUs 54.

The ECU 54 is configured to control each part of the vehicle 50. The bus 53 is a transmission path used when the ECU 54 communicates, and, for example, a controller area network (CAN) is used as a communication protocol. The GW-ECU 52 is provided to relay communication between the plurality of buses 53.

When the ECU 54 transmits a message to the bus 53, the ECUs 54, other than the ECU 54 serving as the transmission source and connected to the bus 53, receive the message, and the message is sent to the other buses 53 via the GW-ECU 52 such that the ECUs 54 connected to the other buses 53 receive the message. In other words, in the in-vehicle network 51, since the message is relayed by the GW-ECU 52, communication is possible even between the ECUs 54 connected to different buses 53. Furthermore, the ECU 54 is configured to transmit, to the bus 53, information on the vehicle 50 as a message. The information on the vehicle 50 includes information on the behavior of the vehicle 50 and the meter information of the vehicle 50.

The acquisition terminal 21 includes a microcomputer 21a that controls the acquisition terminal 21, and a transceiver 21b and an input and output unit 21c connected to the microcomputer 21a. The transceiver 21b is connected to the bus 53 of the in-vehicle network 51, and the input and output unit 21c is connected to the communicator 22 and the like.

The microcomputer 21a is configured to acquire information on the behavior of the vehicle 50 and meter information of the vehicle 50 via the transceiver 21b when the information on the behavior of the vehicle 50 and the meter information of the vehicle 50 is transmitted from the ECU 54 to the bus 53. Examples of information on the behavior of the vehicle 50 include longitudinal acceleration, lateral acceleration, vertical acceleration, a roll angle, a pitch angle, and a yaw angle of the vehicle 50. Examples of information on the meter (meter information) of the vehicle 50 include a vehicle speed and a gear position.

The microcomputer 21a is configured to generate behavior data based on the information on the behavior of the vehicle 50 on the in-vehicle network 51, and generate meter display data based on the meter information (information on the meter) of the vehicle 50 on the in-vehicle network 51. In addition, the microcomputer 21a provides instruction on the start and end of recording of the behavior and meter information, and adds the recording start time to the behavior data and the meter display data. Therefore, the behavior data includes, for example, changes with time in the longitudinal acceleration, the lateral acceleration, the vertical acceleration, the roll angle, the pitch angle, and the yaw angle from the start to the end of recording. Further, the meter display data includes, for example, changes with time in the vehicle speed and the gear position from the start to the end of recording. In addition, the microcomputer 21a has a function of outputting the behavior data and the meter display data from the input and output unit 21c to the communicator 22.

The communicator 22 can communicate with the computer 3 via the network 150, and is provided to transmit the behavior data and the meter display data to the computer 3.

### Computer

The computer 3 is provided to store the video data and the sound data received from the image capturing device 1, and the behavior data and the meter display data received from the acquisition device 2. The video data, the sound data, the behavior data, and the meter display data are acquired during actual traveling of the actual vehicle 50, and played back when the user experiences simulated vehicle traveling. In addition, the computer 3 has a function of transmitting, to the HMD 4, the stored video data, sound data, and meter display data, and transmitting, to the seat device 5, the stored behavior data. The computer 3 is configured to time-synchronize and transmit the video data, the sound data, the behavior data, and the meter display data.

As illustrated in FIG. 1, the computer 3 includes a controller 3a, a storage unit 3b, and a communication unit 3c. The controller 3a is configured to control the computer 3 by performing calculation processing. The storage unit 3b stores data, and the like, received from the image capturing device 1 and the acquisition device 2. In other words, the storage unit 3b stores the video data, the sound data, the behavior data, and the meter display data. The communication unit 3c is provided to communicate with the image capturing device 1, the acquisition device 2, the HMD 4, and the seat device 5 via the network 150.

### HMD

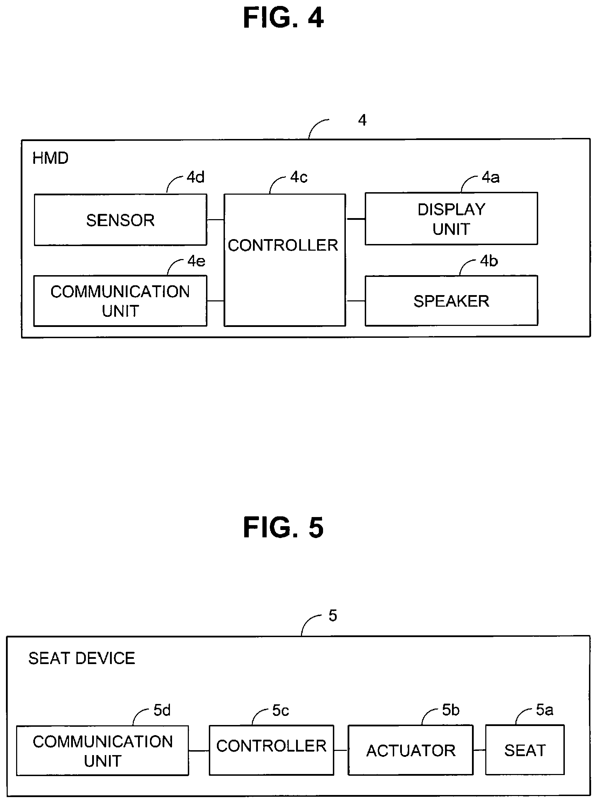

The HMD 4, worn on a head of a user who experiences simulated vehicle traveling, is configured to play back video and sound. As illustrated in FIG. 4, the HMD 4 includes a display unit 4a, a speaker 4b, a controller 4c, a sensor 4d, and a communication unit 4e. The HMD 4 is an example of the "first playback device" of the present invention.

The display unit 4a is configured to display video based on the video data received from the computer 3. In other words, the video captured by the image capturing unit 1a during traveling of the vehicle 50 is reproduced on the display unit 4a. In addition, a meter (a meter display) indicating the vehicle speed and the gear position is displayed in the video as an overlay on the display unit 4a so that a meter value can be adjusted based on the meter display data received from the computer 3. In other words, the meter information during traveling of the vehicle 50 is reproduced.

The speaker 4b is configured to output sound based on the sound data received from the computer 3. In other words, the sound input to the microphone 1b during traveling of the vehicle 50 is reproduced from the speaker 4b.

The controller 4c is configured to control the HMD 4. Specifically, the controller 4c is configured to control the display of the display unit 4a, and control the output of the speaker 4b. The sensor 4d is provided to detect the position and the direction of the user's head. Further, the controller 4c has a function of adjusting the video displayed on the display unit 4a according to a detection result of the sensor 4d. For example, when the field of view is moved (changed) by a movement of the user's head and, the video displayed on the display unit 4a is changed according to the movement of the user's head (the range of the video displayed on the display unit 4a in the video data is changed).

The communication unit 4e can communicate with the computer 3 via the network 150, and is provided to receive the video data, the sound data, and the meter display data from the computer 3.

### Seat Device

The seat device 5, on which the user who experiences simulated vehicle traveling can sit, is configured to play back the behavior of the vehicle. The seat device 5 includes, for example, a Stewart platform-type parallel mechanism, and can move the seat 5a with six degrees of freedom. In other words, the seat device 5 is configured to be able to move the seat 5a in the X-axis, the Y-axis, and the Z-axis directions, and directions respectively rotating around the X-axis, the Y-axis, and the Z-axis. As illustrated in FIG. 5, the seat device 5 includes the seat 5a, six actuators 5b, a controller 5c, and a communication unit 5d. The seat device 5 is an example of the "second playback device" of the present invention.

The seat 5a is provided so that a user can sit thereon. The six actuators 5b are configured to support and move the seat 5a.

The controller 5c is configured to control the seat device 5. Specifically, the controller 5c is configured to move the seat 5a using the actuators 5b based on the behavior data received from the computer 3. For example, when upward acceleration is generated in the behavior data, the controller 5c controls the actuators 5b such that the seat 5a is moved upward. Therefore, the behavior acquired from the in-vehicle network 51 during traveling of the vehicle 50 is reproduced by the seat device 5.

The communication unit 5d can communicate with the computer 3 via the network 150, and is provided to receive the behavior data from the computer 3.

### Operation Example of Virtual Reality System

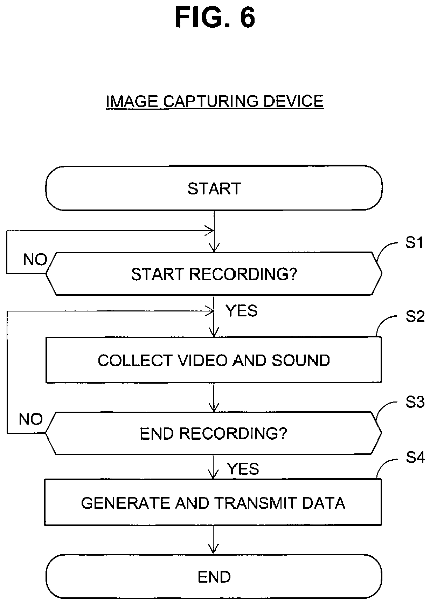

Next, an operation example (the virtual reality method) of the virtual reality system 100 according to the present embodiment will be described with reference to FIGS. 6 to 8. An operation example at the time of data generation, and then an operation example at the time of data playback will be described below.

### At Time of Data Generation

The image capturing device 1 and the acquisition device 2 mounted on the vehicle 50 (refer to FIG. 1) collect information during traveling of the vehicle to generate data. Specifically, collection of the video and the sound by the image capturing device 1 is performed in parallel with collection of the behavior and meter information by the acquisition device 2. Of the image capturing device 1 and the acquisition device 2 that operate in parallel during traveling of the vehicle, the operation of the image capturing device 1 will be described first, and then the operation of the acquisition device 2 will be described. Further, data is generated during, for example, a rally traveling or circuit traveling of the vehicle 50 by a professional driver.

### Operation of Video Device

In step S1 in FIG. 6, the controller 1c determines whether or not video and sound recording has started (refer to FIG. 2). For example, when the image capturing device 1 receives a recording start operation, the controller 1c determines that the recording has started. When the controller 1c determines that the recording has started, the process proceeds to step S2. On the other hand, when the controller 1c determines that the recording has not started, step S1 is repeated. In other words, the controller 1c stands by until the recording starts.

Next, in step S2, the controller 1c collects video using the image capturing unit 1a, and collects sound using the microphone 1b. Specifically, the image capturing unit 1a captures the image of the surroundings of the vehicle 50 in the range of 360 degrees, and the microphone 1b collects the sound in the vehicle cabin.

Next, in step S3, the controller 1c determines whether or not video and sound recording has ended. For example, when the image capturing device 1 receives a recording end operation, the controller 1c determines that the recording has ended. When the controller 1c determines that the recording has not ended, the process returns to step S2 and collection of the video and sound is continued. On the other hand, when the controller 1c determines that the recording has ended, the process proceeds to step S4.

Next, in step S4, the controller 1c generates video data and sound data during a period from the start to the end of recording and transmits the video data and the sound data from the communication unit 1d to the computer 3 (refer to FIG. 1). The computer 3 stores the video data and the sound data received from the image capturing device 1. In addition, the video data is associated with the sound data, and the recording start time is added to the video data and the sound data. Thereafter, the process is ended.

### Operation of Acquisition Device

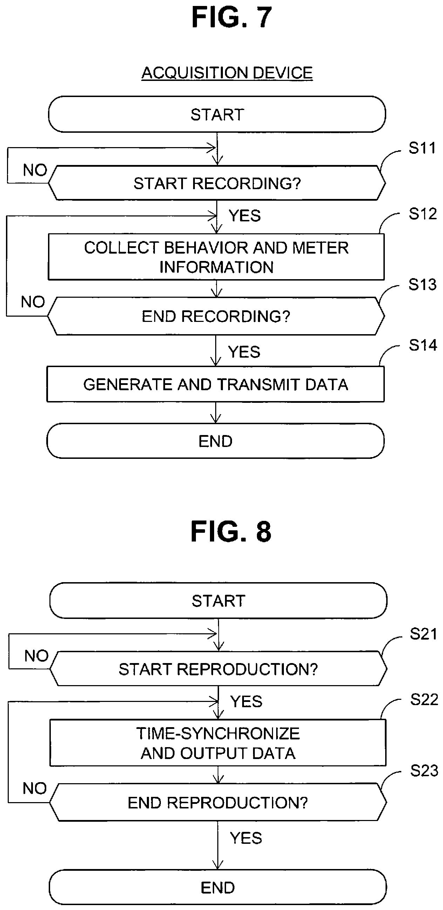

In step S11 in FIG. 7, the microcomputer 21a determines whether or not recording of the behavior and meter information has started (refer to FIG. 3). For example, when the acquisition device 2 receives a recording start operation, the microcomputer 21a determines that recording has started. When the microcomputer 21a determines that the recording has started, the process proceeds to step S12. On the other hand, when the microcomputer 21a determines that the recording has not started, step S11 is repeated. In other words, the microcomputer 21a stands by until the recording is started.

Next, in step S12, the microcomputer 21a collects the behavior and meter information. Specifically, the behavior and meter information of the vehicle 50 transmitted from the ECU 54 to the bus 53 is input to the transceiver 21b whereby the behavior and meter information are collected.

Next, in step S13, the microcomputer 21a determines whether or not recording of the behavior and meter information has ended. For example, when the acquisition device 2 receives a recording end operation, the microcomputer 21a determines that the recording has ended. When the microcomputer 21a determines that the recording has not ended, the process returns to step S12 and collection of the behavior and meter information is continued. On the other hand, when the microcomputer 21a determines that the recording has ended, the process proceeds to step S14.

Next, in step S14, the microcomputer 21a generates the behavior data and the meter display data during a period from the start to the end of recording. The behavior data and the meter display data are output from the input and output unit 21c to the communicator 22, and transmitted from the communicator 22 to the computer 3. The computer 3 stores the behavior data and the meter display data received from the acquisition device 2. In addition, the recording start time is added to the behavior data and the meter display data. Thereafter, the process is ended.

### At Time of Data Playback

Data playback is performed by the HMD 4 worn on the user's head and the seat device 5 on which the user sits. By playback of the data, it is possible to allow the user to experience simulated vehicle traveling.

In step S21 in FIG. 8, the controller 3a determines whether or not data playback has started (refer to FIG. 1). For example, when the computer 3 receives a playback start operation, the controller 3a determines that the playback has started. When the controller 3a determines that the playback has started, the process proceeds to step S22. On the other hand, when the controller 3a determines that the playback has not started, step S21 is repeated. In other words, the computer 3 stands by until the playback is started.

Next, in step S22, the controller 3a transmits the data stored in the storage unit 3b from the communication unit 3c. Specifically, the video data, the sound data, the behavior data, and the meter display data are time-synchronized and output. The time-synchronization is performed based on the recording start time added to each data. For example, when there is a deviation between the recording start times added to the pieces of data, the latest recording start time among the recording start times is set as the output start time of all data, and data corresponding to the elapsed playback time from the output start time is output. The video data, the sound data, and the meter display data are output to the HMD 4, and the behavior data is output to the seat device 5.

The controller 4c of the HMD 4 (refer to FIG. 4) displays the video on the display unit 4a based on the video data received by the communication unit 4e and the detection result of the sensor 4d. A meter indicating the vehicle speed and the gear position is displayed as an overlay on the display unit 4a so that a meter value can be adjusted based on the meter display data received by the communication unit 4e. Further, the controller 4c outputs a sound from the speaker 4b based on the sound data received by the communication unit 4e. Therefore, the video, sound and meter information acquired during actual traveling of the actual vehicle 50 are presented to the user.

The controller 5c of the seat device 5 (refer to FIG. 5) drives the actuator 5b based on the behavior data received by the communication unit 5d. By the driving of the actuator 5b, the seat 5a is moved. Therefore, the behavior acquired during the actual traveling of the actual vehicle 50 is provided to the user. Moreover, since the seat 5a can move with six degrees of freedom, it is possible to reproduce the longitudinal acceleration, lateral acceleration, vertical acceleration, roll angle, pitch angle, and yaw angle during traveling of the vehicle.

Next, in step S23, the controller 3a determines whether or not the data playback has ended. For example, when the data is played back to the end, and when the computer 3 receives the playback end operation, the controller 3a determines that the playback has ended. When the controller 3a determines that the playback has not ended, the process returns to step S22 and the data playback is continued. On the other hand, when the controller 3a determines that the playback has ended, the process is ended.

### Advantageous Effect

In the present embodiment, as described above, the virtual reality system includes the image capturing device 1 that captures the image of the surroundings of the vehicle 50 during traveling of the vehicle 50, the acquisition device 2 that acquires behavior of the vehicle 50 during traveling of the vehicle 50, the computer 3 that stores the video data received from the image capturing device 1 and the behavior data received from the acquisition device 2, and time-synchronizes and outputs the video data and behavior data, the HMD 4 that plays back the video data, and the seat device 5 that plays back the behavior data. With the above configuration, since video and behavior are acquired while the actual vehicle 50 actually travels and based on the video and the behavior is played back, video and behavior based on the reality are reproduced. Therefore it is possible to enhance the sense of presence during the experience of simulated vehicle traveling. In addition, since the video data and the behavior data are time-synchronized, it is possible to prevent the video played back by the HMD 4 deviating from the behavior played back by the seat device 5. Moreover, since data is generated during, for example, a rally traveling or circuit traveling of the vehicle 50 by a professional driver and the data is played back, it is possible to allow the user to have a simulated experience as if the user sits at the passenger seat of the vehicle 50 driven by the professional driver.

Further, in the present embodiment, the meter information of the vehicle 50 is acquired during traveling of the vehicle 50 by the acquisition device 2, and the meter is displayed as an overlay on the display unit 4a. Therefore, the user can easily understand a state of the vehicle 50.

In addition, in the present embodiment, since the image of the surroundings of the vehicle 50 is captured in a range of 360 degrees by the image capturing device 1, it is possible to reproduce all the surroundings of the vehicle 50. Further, since the video displayed on the display unit 4a is changed according to the movement of the user's head, the sense of presence can be more enhanced.

Moreover, in the present embodiment, since the behavior of the vehicle 50 is acquired from the in-vehicle network 51, it is possible to acquire the exact behavior of the vehicle 50. Therefore, the sense of presence can be more enhanced.

### Other Embodiments

In addition, the present embodiment in the present disclosure is merely an example in all aspects, and will not become a basis for limited interpretation. Therefore, the technical scope of the present invention is not interpreted only by the above embodiment, but is also defined based on the description of the scope of claims. Furthermore, the technical scope of the present invention includes all modifications equivalent in meaning to and within the scope of the claims.

For example, in the above embodiment, the image capturing device 1 and the acquisition device 2 are connected to the computer 3 via the network 150. However, the present invention is not limited thereto, and the image capturing device and the acquisition device do not have to be connected to the computer. In this case, data (video data, sound data, behavior data, and meter display data) collected by the image capturing device and the acquisition device may be stored in the computer via a storage medium (not shown).

Furthermore, in the above embodiment, the HMD 4 and the seat device 5 are connected to the computer 3 via the network 150. However, the present invention is not limited thereto, and the HMD and the seat device may be directly connected to the computer without passing through a network.

In addition, in the above embodiment, the network 150 may be a public line or a dedicated line.

Moreover, in the above embodiment, the computer 3 may be provided for each set of HMD 4 and seat device 5, or one computer 3 may be provided for a plurality of sets of HMDs 4 and seat device 5.

Further, in the above embodiment, the images of the surroundings of the vehicle 50 are captured in the range of 360 degrees by the image capturing unit 1a. However, the present invention is not limited thereto, and it is possible that only an image of the front of the vehicle may be captured by the image capturing unit.

In addition, in the above embodiment, the image capturing unit 1a is arranged at the passenger seat. However, the present invention is not limited thereto, and the image capturing unit may be arranged at a location other than the passenger seat.

Moreover, in the above embodiment, the microphone 1b is arranged in the vehicle cabin. However, the present invention is not limited thereto, and two microphones may be respectively arranged in the vehicle cabin and the engine compartment of the vehicle, and generate sound data by synthesizing sounds input to the microphones to generate sound data. The number of microphones may be three or more, and the locations where the microphones are arranged may be appropriately changed.

Furthermore, in the above embodiment, the communication unit 1d is provided in the image capturing device 1, and the communicator 22 is provided in the acquisition device 2. However, the present invention is not limited thereto, and one communicator may be shared by the image capturing device and the acquisition device.

Moreover, in the above embodiment, the behavior of the vehicle 50 is acquired from the bus 53 of the in-vehicle network 51. However, the present invention is not limited thereto, and an acceleration sensor, an angle sensor, and the like, may be provided in the acquisition device to acquire the behavior of the vehicle.

In addition, in the above embodiment, the longitudinal acceleration, the lateral acceleration, the vertical acceleration, the roll angle, the pitch angle, and the yaw angle are acquired from the bus 53. However, the present invention is not limited thereto, and the longitudinal acceleration, the lateral acceleration, the vertical acceleration, the roll angle, the pitch angle, and the yaw angle may be calculated based on information acquired from the bus 53.

Furthermore, in the above embodiment, the behavior data is generated based on the longitudinal acceleration, the lateral acceleration, the vertical acceleration, the roll angle, the pitch angle, and the yaw angle. However, the present invention is not limited thereto, and the behavior data may be generated based on at least one of the longitudinal acceleration, the lateral acceleration, the vertical acceleration, the roll angle, the pitch angle, and the yaw angle. For example, the behavior data may include only changes with time in the vertical acceleration. In this case, the seat does not have to be moved with six degrees of freedom. Instead, a woofer may be provided on the lower side of the seat surface to reproduce the vertical movement.

Moreover, in the above embodiment, the acquisition device 2 acquires the meter information. However, the present invention is not limited thereto, and the acquisition device does not have to acquire the meter information. In other words, although the meter is displayed as an overlay on the video in the above embodiment, the present invention is not limited thereto, and the meter does not have to be displayed as an overlay on the video.

In addition, in the above embodiment, a state of the meter displayed as an overlay on the video of the display unit 4a may be switched between a display state and a non-display state.

Furthermore, in the above embodiment, the vehicle speed and the gear position are acquired from the in-vehicle network 51 by the acquisition device 2, and displayed as an overlay. However, the present invention is not limited thereto, and an accelerator operation amount, a brake operation amount, a steering operation amount, and the like, may be acquired from the in-vehicle network by the acquisition device, and displayed as an overlay. With the above configuration, the user who experiences simulated vehicle traveling may know an operation performed by a driver of the vehicle 50.

Further, in the above embodiment, the HMD 4 that plays back the video is provided. However, the present invention is not limited thereto, and a flat display or a spherical display that plays back the video may be provided.

In addition, in the above embodiment, the seat device 5 has the Stewart platform-type parallel mechanism. However, the present invention is not limited thereto, and any type of seat device may be provided as long as it can play back the behavior of the vehicle and provide the played-back behavior to the user.

Moreover, in the above embodiment, the controller 1c may change at least one of a filming frame rate, an exposure time, and sensitivity of the image capturing unit 1a. For example, the controller 1c may acquire speed information of the vehicle 50 during capturing the image and control the image capturing unit 1a based on the speed information. Specifically, the controller 1c may increase the exposure time of the image capturing unit 1a as the speed of the vehicle 50 increases. As such, an image in which scenery looks like flowing can be obtained, and a sense of speed can be reproduced. Further, for example, when the sun is in front of the vehicle 50, the exposure time may be shortened or the sensitivity may be lowered, such that halation does not occur.

In addition, in the above embodiment, image processing may be performed on the image to be played back. For example, since the scenery flows when the actual vehicle 50 is moving at a high speed, processing of weakening or blurring the contour of the image to be played back may be performed. Specifically, when the exposure time of the image capturing unit 1a is shortened, the movement of the image to be played back may seem to be slower than the flowing of the scenery viewed from the actual vehicle 50. In this case, the sense of speed can be reproduced by weakening or blurring the contour of the image. Further, since the field of view of a person aboard the vehicle 50 becomes narrower as the speed of the vehicle 50 increases, processing of shading off the periphery of the center area of the image to be played back may be performed. Specifically, the center area of the image and periphery thereof to be displayed may be played back without performing image processing, and an area further than a predetermined distance from the center, may be processed with a stronger shading off as the speed of the vehicle 50 increases. Further, the shading off may gradually increase according to the distance from the center.

Moreover, in the above embodiment, CAN is used as a communication protocol of the in-vehicle network 51. However, the present invention is not limited thereto, and standards other than CAN may be used as a communication protocol of the in-vehicle network.

The present invention can be applied to a virtual reality system and a virtual reality method that allow a user to experience simulated vehicle traveling.

## Claims

1. A virtual reality system (100) for allowing a user to experience simulated vehicle traveling, the virtual reality system comprising:
an image capturing device (1) mounted on a vehicle (50) and configured to capture an image of surroundings of the vehicle (50) during traveling of the vehicle (50) and to generate video data;
an acquisition device (2) mounted on the vehicle (50) and configured to acquire behavior of the vehicle (50) during traveling of the vehicle (50) and to generate behavior data based on information on the behavior;
a computer (3) configured to store the video data received from the image capturing device (1) and the behavior data received from the acquisition device (2), and time-synchronize the video data and the behavior data;
a first playback device (4) configured to play back the video data; and
a second playback device (5) configured to play back the behavior data.

2. The virtual reality system (100) according to claim 1, wherein:
the acquisition device (2) is configured to acquire meter information of the vehicle (50) during traveling of the vehicle (50) and generate meter display data based on the meter information;
the computer (3) is configured to store the meter display data received from the acquisition device (2), time-synchronize the meter display data with the video data and the behavior data; and
the first playback device (4) is configured to play back the meter display data.

3. The virtual reality system (100) according to claim 1 or 2, wherein the image capturing device (1) is configured to capture the image of the surroundings of the vehicle (50) in a range of 360 degrees.

4. The virtual reality system (100) according to any one of claims 1 to 3, wherein the acquisition device (2) is configured to acquire the behavior of the vehicle (50) from an in-vehicle network of the vehicle (50).

5. The virtual reality system (100) according to claim 1, wherein:
the image capturing device (1) includes a microphone and is configured to collect sound in a cabin of the vehicle (50) via the microphone during traveling of the vehicle (50) and generate sound data based on the sound; and
the image capturing device (1) is configured to associate the video data with the sound data and transmit the video data and the sound data to the computer (3).

6. The virtual reality system (100) according to any one of claims 1 to 4, wherein the image capturing device (1) is configured to add a recording start time of the image to the video data.

7. The virtual reality system (100) according to claim 5 or 6, wherein the image capturing device (1) is configured to add a recording start time of the sound to the sound data.

8. The virtual reality system (100) according to any one of claims 1 to 7, wherein the acquisition device (2) is configured to add a recording start time of the behavior to the behavior data.

9. The virtual reality system (100) according to claim 8, wherein the behavior data includes changes with time in longitudinal acceleration, lateral acceleration, vertical acceleration, a roll angle, a pitch angle, and a yaw angle of the vehicle (50) from a start to an end of the recording.

10. The virtual reality system (100) according to claim 2, wherein the acquisition device (2) is configured to add a recording start time of the meter information to the meter display data.

11. The virtual reality system (100) according to any one of claims 1 to 10, wherein the first playback device (4) is a head-mounted display.

12. The virtual reality system (100) according to any one of claims 1 to 11, wherein the second playback device (5) is a seat device.

13. A virtual reality method of allowing a user to experience simulated vehicle traveling, the virtual reality method comprising:
by an image capturing device (1) mounted on a vehicle (50), capturing an image of surroundings of the vehicle (50) during traveling of the vehicle (50) and generating video data, and, by an acquisition device (2) mounted on the vehicle (50), acquiring behavior of the vehicle (50) during traveling of the vehicle (50) and generating behavior data;
storing, by a computer (3), the video data received from the image capturing device (1) and the behavior data received from the acquisition device (2);
time-synchronizing, by the computer (3), the video data and the behavior data; and
playing back, by a first playback device (4), the video data, and playing back, by a second playback device (5), the behavior data.
